# EUROPEAN PATENT SPECIFICATION

(11) **EP 4 007 106 B1**
(45) Date of publication and mention of the grant of the patent: **02.09.2026**
(21) Application number: 19912195.5
(22) Date of filing: 23.07.2019
(51) Int. Cl.: H02J 3/16, H02J 3/38

(54) **POWER CONVERSION DEVICE AND DISTRIBUTED POWER SOURCE SYSTEM**
STROMWANDLERVORRICHTUNG UND VERTEILTES STROMVERSORGUNGSSYSTEM
DISPOSITIF DE CONVERSION DE PUISSANCE ET SYSTÈME DE SOURCE D'ALIMENTATION DISTRIBUÉE

(43) Date of publication of application: 01.06.2022
(73) Proprietor: TMEIC Corporation, Tokyo 104-0031 (JP)
(72) Inventor: SHIGEMASA, Takashi, Tokyo 104-0031 (JP); MITSUGI, Yasuaki, Tokyo 104-0031 (JP); HIRA, Katsuya, Tokyo 104-0031 (JP)
(74) Representative: TBK
(86) International application number: PCT/JP2019/028886
(87) International publication number: WO 2021/014579

(56) References cited:
- WO-A1-2014/199502
- WO-A2-2014/060065
- JP-A- 2017 034 739
- JP-A- 2017 063 525
- WANG LIJUN ET AL: "A Voltage Stability Control based on Impedance Estimation for the Independent Microgrid", 2018 IEEE INTERNATIONAL POWER ELECTRONICS AND APPLICATION CONFERENCE AND EXPOSITION (PEAC), IEEE, 4 November 2018 (2018-11-04), pages 1 - 5, XP033476837, DOI: 10.1109/PEAC.2018.8590374
- JUAN C. VASQUEZ ET AL: "Adaptive droop control applied to distributed generation inverters connected to the grid", INDUSTRIAL ELECTRONICS, 2008. ISIE 2008. IEEE INTERNATIONAL SYMPOSIUM ON, 1 June 2008 (2008-06-01), Piscataway, NJ, USA, pages 2420 - 2425, XP055307514, ISBN: 978-1-4244-1665-3, DOI: 10.1109/ISIE.2008.4677215
- DE BRABANDERE K ET AL: "A voltage and frequency droop control method for parallel inverters", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20 June 2004 (2004-06-20), pages 3501 - 3507, XP010739392, ISBN: 978-0-7803-8399-9
- ANNA RITA DI FAZIO ET AL: "Decentralised voltage regulation in smart grids using reactive power from renewable DG", ENERGY CONFERENCE AND EXHIBITION (ENERGYCON), 2012 IEEE INTERNATIONAL, IEEE, 9 September 2012 (2012-09-09), pages 580 - 586, XP032466741, ISBN: 978-1-4673-1453-4, DOI: 10.1109/ENERGYCON.2012.6348220

## Description

### [Field]

Embodiments described herein relate generally to a power conversion device and a distributed power source system.

### [Background Art]

In a distributed power source system using a distributed power source such as a solar power generator, a wind power generator, a battery, and the like connected to an electric power system, reactive power is supplied from the distributed power source to the connection point to compensate the voltage fluctuation amount of the connection point of the distributed power source. The supply of the reactive power is controlled by a power conversion device converting the electrical power of the distributed power source into electrical power corresponding to the electric power system.

For example, a control is known in which reactive power is supplied to the connection point so that the power factor is constant. The voltage fluctuation of the connection point caused by the active power supplied from the distributed power source can be suppressed thereby.

However, for reactive power control using a fixed power factor, there is a possibility that the voltage of the connection point may increase and power transmission cannot be performed when the electrical power supplied by the distributed power source is increased if the system impedance is large such as for a distal distributed power source, etc. Also, when overseas, etc., there are requirements to control the voltage of the connection point to a designated value.

It has been proposed to estimate the apparent system characteristics when viewed from the connection point of the distributed power source by using a linear approximation formula and to supply the reactive power based on the estimation result. The reactive power that corresponds to the system impedance and the like can be supplied thereby; and it becomes difficult to suppress the fluctuation of the voltage when the system impedance is large.

In particular, when there are other distributed power plants, plant loads, etc., directly proximal to the connection point, it has been difficult to appropriately suppress the voltage fluctuation of the connection point even by voltage suppression control using a linear approximation formula due to the effects of the other distributed power plants, the plant loads, etc. Therefore, it is desirable to be able to control the voltage of the connection point of the distributed power source more appropriately to the designated value in a distributed power source system and a power conversion device used in the distributed power source system.

### [Prior Art Documents]

### [Patent Documents]

[Patent Document 1]
JP-A 2017-34739 (Kokai)

Document "A Voltage Stability Control based on Impedance Estimation for the Independent Mircogrid" by Lijun Wang et al. describes a microgrid comprising a distributed power source such as a distributed generator (DG) and an inverter. In particular, a feeder impedance of a microsource is estimated by using an extended Kalman filter algorithm.

Document "Adaptive Droop Control Applied to Distributed Generation Inverters Connected to the Grid" by Juan Vásquez et al. proposes a control scheme for voltage source inverters connected to the grid, which is based on the droop method, and uses some estimated variables from the grid such as the voltage and the frequency, and the magnitude and angle of the grid impedance. Hence, the inverter is able to inject independently active and reactive power to the grid. The controller provides a proper dynamics decoupled from the grid impedance.

### [Summary of Invention]

### [Problem to be Solved by the Invention]

**It** is an object of the invention to provide a power conversion device and a distributed power source system in which the voltage of the connection point of a distributed power source can be controlled more appropriately to a designated value.

### [Means for Solving the Problem]

This object is solved by a power conversion device as set out in claim 1.

Advantageous developments are defined in the dependent claims.

### [Effects of the Invention]

According to an embodiment of the invention, a power conversion device and a distributed power source system are provided in which the voltage of the connection point of a distributed power source can be controlled more appropriately to a designated value.

### [Brief Description of Drawings]

[Fig. 1]

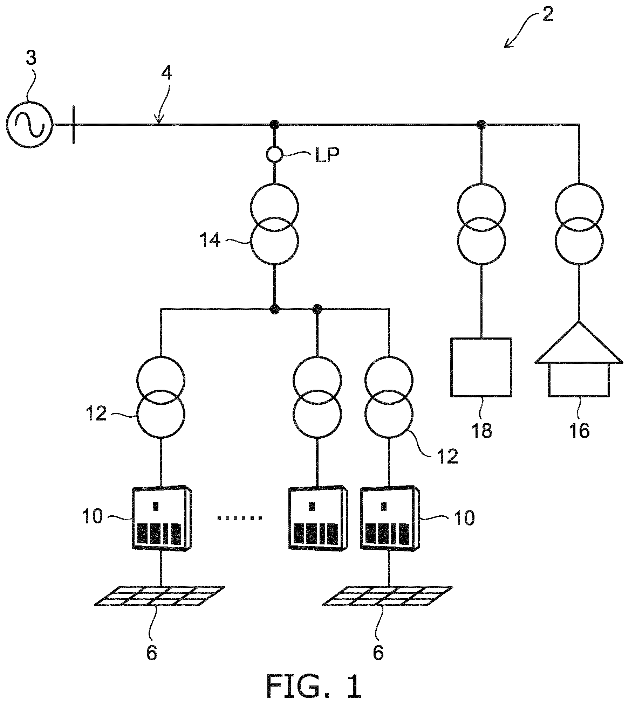

   FIG. 1 is a block diagram schematically illustrating a distributed power source system according to an embodiment.
[Fig. 2]

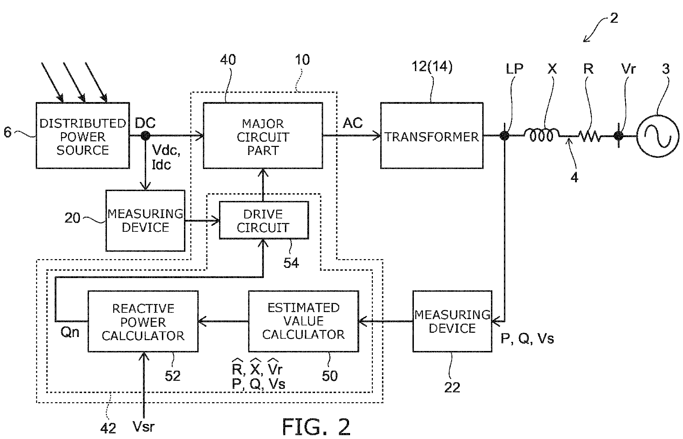

   FIG. 2 is a block diagram schematically illustrating the power conversion device of the distributed power source system according to the embodiment.
[Fig. 3]

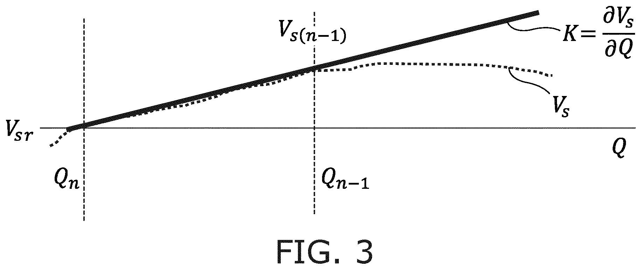

   FIG. 3 is a graph schematically illustrating an example of the operation of the reactive power calculator.
[Fig. 4]

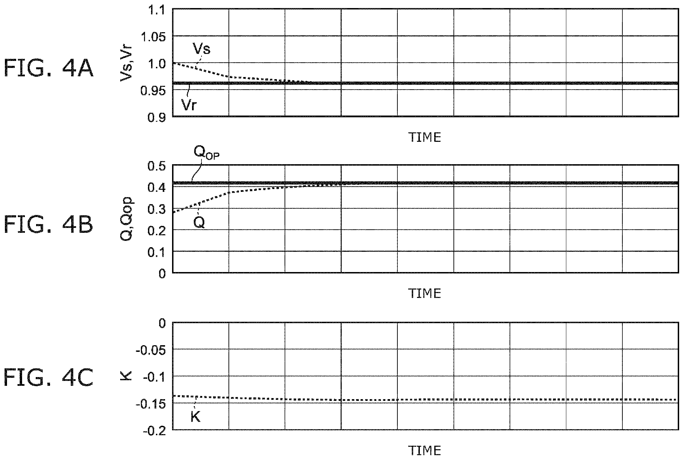

   FIG. 4A to FIG. 4C are graphs schematically illustrating an example of simulation results of the distributed power source system according to the embodiment.
[Fig. 5]

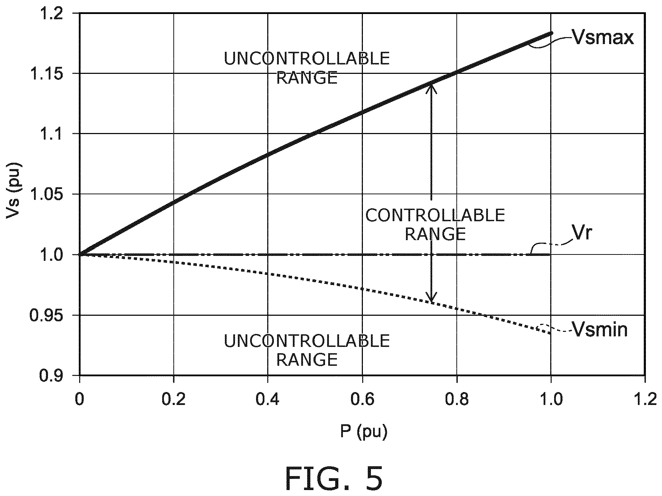

   FIG. 5 is a graph schematically illustrating an example of the operation of the distributed power source system according to the embodiment.
[Fig. 6]

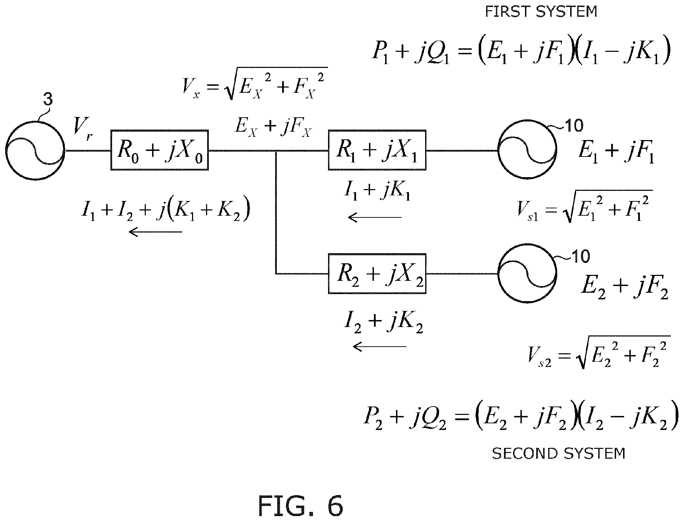

   FIG. 6 is an interference system diagram used in the simulation.
[Fig. 7]

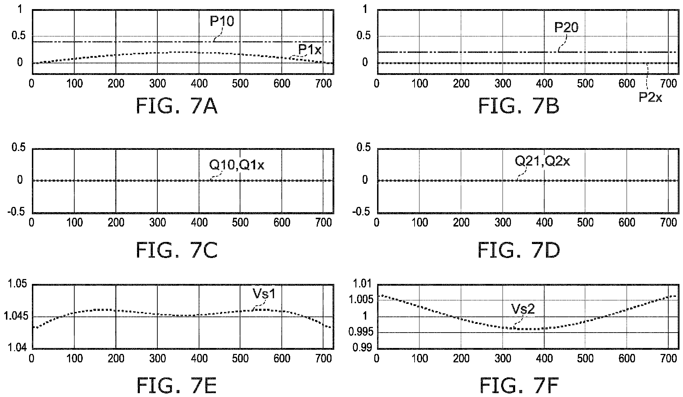

   FIG. 7A to FIG. 7F are graphs schematically illustrating an example of the simulation.
[Fig. 8]

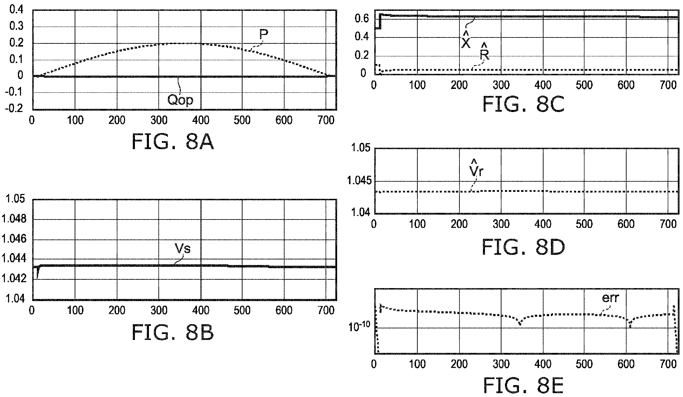

   FIG. 8A to FIG. 8E are graphs schematically illustrating an example of a simulation.
[Fig. 9]

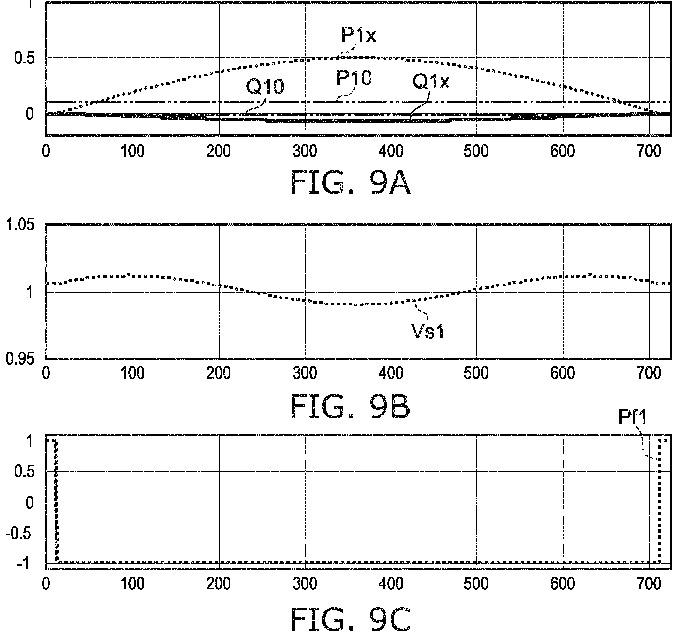

   FIG. 9A to FIG. 9C are graphs schematically illustrating an example of a simulation.
[Fig. 10]

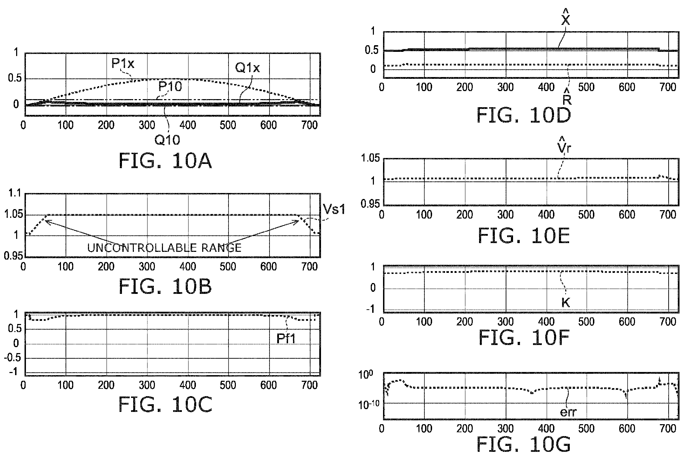

   FIG. 10A to FIG. 10G are graphs schematically illustrating an example of a simulation.
[Fig. 11]

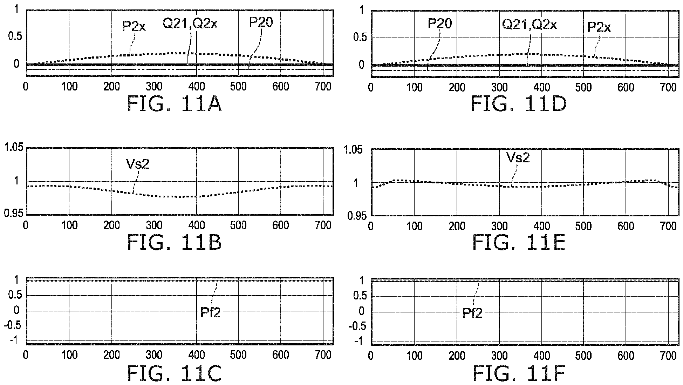

   FIG. 11A to FIG. 11F are graphs schematically illustrating an example of a simulation.
[Fig. 12]

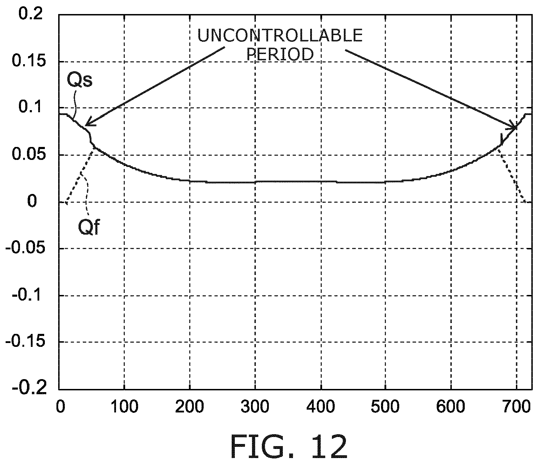

   FIG. 12 is a graph schematically illustrating an example of a simulation.
[Fig. 13]

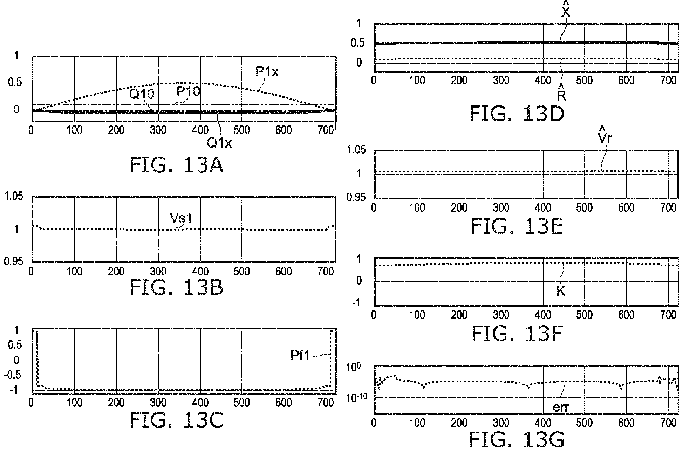

   FIG. 13A to FIG. 13G are graphs schematically illustrating an example of a simulation.
[Fig. 14]

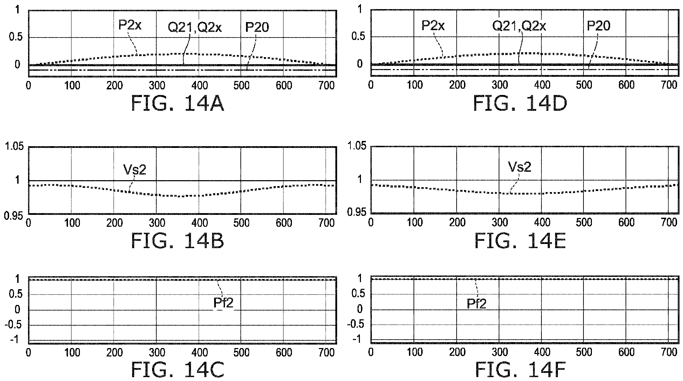

   FIG. 14A to FIG. 14F are graphs schematically illustrating an example of a simulation.
[Fig. 15]

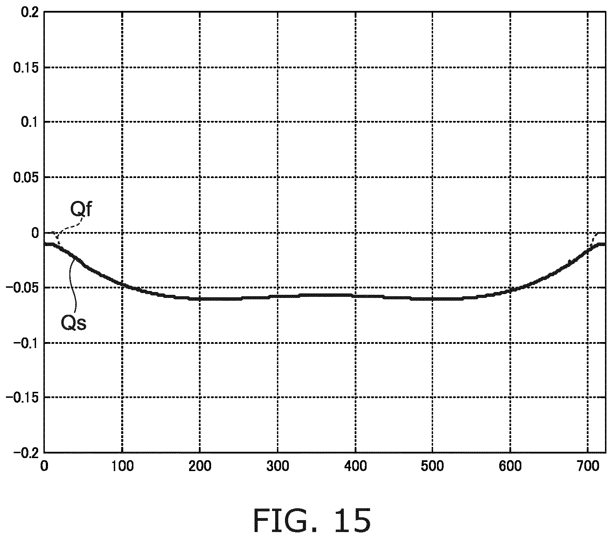

   FIG. 15 is a graph schematically illustrating an example of a simulation.
[Fig. 16]

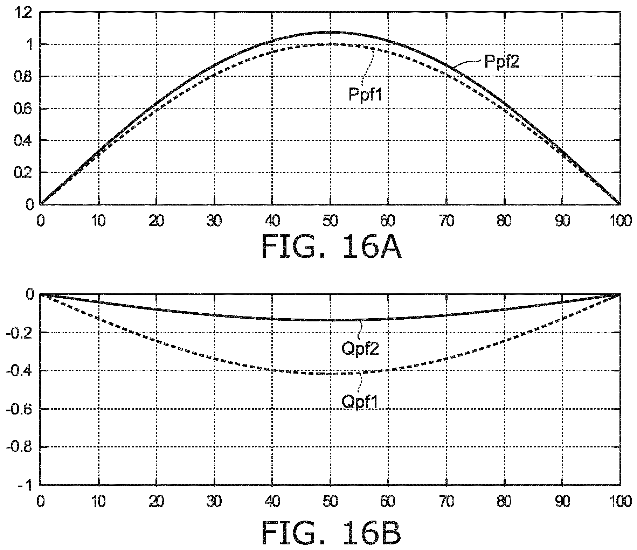

   FIG. 16A and FIG. 16B are graphs schematically illustrating an example of the operation of the distributed power source system according to the embodiment.

### [Description of Embodiments]

Embodiments will now be described with reference to the drawings.

The drawings are schematic and conceptual; and the relationships between the thicknesses and widths of portions, the proportions of sizes among portions, etc., are not necessarily the same as the actual values. Also, the dimensions and proportions may be illustrated differently among drawings, even for identical portions.

In the specification and drawings, components similar to those described previously or illustrated in an antecedent drawing are marked with the same reference numerals; and a detailed description is omitted as appropriate.

FIG. 1 is a block diagram schematically illustrating a distributed power source system according to an embodiment.

As illustrated in FIG. 1, the distributed power source system 2 includes a power conversion device 10, a distributed power source 6, and an electric power system 4 connected to an infinite bus power system 3. The electrical power of the electric power system 4 is alternating current power. The electrical power of the electric power system 4 is, for example, three-phase alternating current power.

The distributed power source 6 is, for example, a solar panel. The electrical power of the distributed power source 6 is direct current power. The power conversion device 10 is connected to the distributed power source 6 and is connected to the electric power system 4 via transformers 12, 14, etc. The power conversion device 10 connects the distributed power source 6 to the electric power system 4 by converting the direct current power of the distributed power source 6 into alternating current power corresponding to the electric power system 4 and by supplying the alternating current power after the conversion to the electric power system 4.

The distributed power source 6 is not limited to a solar panel and may be, for example, another generator such as a wind power generator, a gas turbine generator, etc. Also, the distributed power source 6 may be, for example, a charge storage element such as a storage battery, a capacitor, etc.

Other than the distributed power source 6 and the power conversion device 10, for example, there is a possibility that a consumer 16 (a load), another generator 18, etc., are connected directly proximal to the electric power system 4. Based on the output of the distributed power source 6, the power conversion device 10 supplies active power to the electric power system 4 and supplies the optimal reactive power to the electric power system 4. Thereby, the power conversion device 10 suppresses the undesirable fluctuation of the voltage of a connection point LP to the electric power system 4 due to it's own supply of the active power and the effects of the consumer 16 and/or the generator 18.

FIG. 2 is a block diagram schematically illustrating the power conversion device of the distributed power source system according to the embodiment.

As illustrated in FIG. 2, the power conversion device 10 includes a major circuit part 40 and a controller 42. The major circuit part 40 converts the direct current power or the alternating current power supplied from the distributed power source 6 into the alternating current power corresponding to the electric power system 4. The controller 42 controls the operation of the major circuit part 40.

The major circuit part 40 includes, for example, multiple switching elements and converts the electrical power by the ON/OFF of the multiple switching elements. The controller 42 controls the conversion of the electrical power by the major circuit part 40 by controlling the ON/OFF switching of the multiple switching elements of the major circuit part 40. The major circuit part 40 includes, for example, a well-known inverter circuit. The configuration of the major circuit part 40 may be any configuration that can perform the power conversion recited above.

The distributed power source system 2 further includes, for example, measuring devices 20 and 22. The measuring device 20 detects a voltage value Vdc of the direct current voltage input from the distributed power source 6 to the power conversion device 10 and a current value Idc of the direct current input from the distributed power source 6 to the power conversion device 10, and inputs the detected voltage value Vdc and the detected current value Idc to the controller 42.

For example, the controller 42 performs a control using the MPPT (Maximum Power Point Tracking) technique in which the direct current power is caused to track the maximum power point of the distributed power source 6. For example, based on the voltage value Vdc and the current value Idc detected by the measuring device 20, the controller 42 extracts the maximum power point (the optimal operating point) of the distributed power source 6 and controls the operation of the major circuit part 40 to supply, to the electric power system 4, an active power corresponding to the extracted maximum power point.

However, the method for determining the active power supplied from the power conversion device 10 to the electric power system 4 is not limited to the MPPT technique. For example, the active power that is supplied from the power conversion device 10 to the electric power system 4 may be determined based on an active power command value input from a higher-level controller, etc. The controller 42 may control the operation of the major circuit part 40 to supply, to the electric power system 4, an active power corresponding to the input active power command value.

The measuring device 22 detects an active power value P of the connection point LP of the power conversion device 10 to the electric power system 4, a reactive power value Q of the connection point LP, and a voltage value Vs of the connection point LP, and inputs the detected active power value P, the detected reactive power value Q, and the detected voltage value Vs to the controller 42.

The controller 42 includes an estimated value calculator 50, a reactive power calculator 52, and a drive circuit 54. The controller 42 inputs, to the estimated value calculator 50, the active power value P, the reactive power value Q, and the voltage value Vs input from the measuring device 22.

Based on the active power value P, the reactive power value Q, and the voltage value Vs input from the measuring device 22, the estimated value calculator 50 calculates an estimated value ^R of a resistance component R of the system impedance of the electric power system 4, an estimated value ^X of a reactance component X of the system impedance of the electric power system 4, and an estimated value ^Vr of a voltage value Vr of the infinite bus power system 3. ^ (hat) which represents the estimated values such as ^*R* and the like is the notation directly above R and the like as illustrated in FIG. 2, etc., but is shifted in the notation as in ^*R* to accommodate the formatting in the specification.

In other words, the estimated value calculator 50 estimates the system characteristics of the electric power system 4 based on the active power value P, the reactive power value Q, and the voltage value Vs. In this case, the estimated value calculator 50 considers the system model of the electric power system 4 to be the simplest system model of only the resistance component R and the reactance component X of the system impedance as illustrated in FIG. 2.

By using a Kalman filter applicable to a nonlinear equation, the estimated value calculator 50 calculates the estimated values ^R, ^X, and ^Vr from the active power value P, the reactive power value Q, and the voltage value Vs. More specifically, the estimated value calculator 50 calculates the estimated values ^R, ^X, and ^Vr from the active power value P, the reactive power value Q, and the voltage value Vs by using an extended Kalman filter. The estimated value calculator 50 inputs the calculated estimated values ^R, ^X, and ^Vr to the reactive power calculator 52. Also, the estimated value calculator 50 also inputs the active power value P, the reactive power value Q, and the voltage value Vs used in the calculation to the reactive power calculator 52 with the estimated values ^R, ^X, and ^Vr.

The Kalman filter that is applicable to the nonlinear equation is not limited to an extended Kalman filter and may be, for example, an Unscented Kalman filter, an ensemble Kalman filter, etc. However, compared to these filters, the calculation load of the estimated value calculator 50 can be reduced by using an extended Kalman filter.

The estimated values ^R, ^X, and ^Vr, the active power value P, the reactive power value Q, and the voltage value Vs from the estimated value calculator 50 are input to the reactive power calculator 52; and a designated value Vsr of the voltage of the connection point LP is input to the reactive power calculator 52. For example, the designated value Vsr of the voltage of the connection point LP is input to the reactive power calculator 52 from a higher-level controller via a network, etc. For example, the designated value Vsr of the voltage of the connection point LP may be manually settable by an operator or the like, may be a preset constant value, etc.

The reactive power calculator 52 calculates a reactive power command value Qn of the reactive power supplied to the electric power system 4 based on the estimated values ^R, ^X, and ^Vr, the active power value P, the reactive power value Q, and the voltage value Vs input from the estimated value calculator 50 and the designated value Vsr of the voltage of the connection point LP input from the higher-level controller or the like. The reactive power command value Qn is a command value of the reactive power supplied to the electric power system 4 to cause the voltage value Vs of the connection point LP to approach the designated value Vsr. The reactive power calculator 52 inputs the calculated reactive power command value Qn to the drive circuit 54.

The reactive power command value Qn which is calculated by the reactive power calculator 52 is input to the drive circuit 54; and the voltage value Vdc and the current value Idc of the distributed power source 6 which are measured by the measuring device 20 are input to the drive circuit 54.

The drive circuit 54 determines the active power by a control using the MPPT technique based on the voltage value Vdc and the current value Idc, and drives the major circuit part 40 to output the determined active power and the reactive power corresponding to the reactive power command value Qn. The drive circuit 54 supplies the determined active power and the reactive power corresponding to the reactive power command value Qn from the major circuit part 40 to the electric power system 4 by the ON/OFF switching of the multiple switching elements of the major circuit part 40.

The measuring device 22 and the estimated value calculator 50 regularly acquire the active power value P, the reactive power value Q, and the voltage value Vs. Each time the active power value P, the reactive power value Q, and the voltage value Vs are acquired, the estimated value calculator 50 calculates (predicts) the estimated values ^R, ^X, and ^Vr and updates the current state from the predicted state and the information due to observation.

The reactive power calculator 52 calculates the reactive power command value Qn each time the estimated values ^R, ^X, and ^Vr are input from the estimated value calculator 50. Each time the reactive power command value Qn is input, the drive circuit 54 generates a control signal of the major circuit part 40 and supplies the active power and the reactive power from the major circuit part 40 to the electric power system 4. By repeating the processing recited above, the controller 42 dynamically supplies the active power corresponding to the distributed power source 6 to the electric power system 4 and supplies the reactive power corresponding to the designated value Vsr of the voltage of the connection point LP to the electric power system 4.

Thus, by supplying the active power and the reactive power to the electric power system 4, the fluctuation of the voltage of the connection point LP due to the supply of the active power from the power conversion device 10 to the electric power system 4 and/or the effects of the consumer 16, the generator 18, etc., can be suppressed. For example, the fluctuation of the voltage value Vs of the connection point LP can be reduced to be within ±2% of the designated value Vsr.

In the power conversion device 10, the estimated values ^R, ^X, and ^Vr are calculated using an extended Kalman filter (a Kalman filter applicable to a nonlinear equation). For example, compared to a method of estimating the system characteristics of the electric power system 4 using a linear approximation formula, the system characteristics of the electric power system 4 can be estimated more appropriately thereby.

For example, even when the placement location of the distributed power source 6 is distal and the resistance component R and the reactance component X of the system impedance are large, the system characteristics of the electric power system 4 can be estimated more appropriately; and the voltage fluctuation of the connection point LP can be suppressed.

Also, even when a load (the consumer 16) such as a plant or the like and/or another distributed power source (the generator 18) are directly proximal, the effects of the load and the other distributed power source can be estimated as the fluctuation of the system characteristics; and the corresponding reactive power can be supplied to the connection point LP. Accordingly, even when the load and/or the other distributed power source are directly proximal, the voltage of the connection point LP of the distributed power source 6 can be controlled more appropriately to the designated value Vsr.

The calculation by the estimated value calculator 50 of the estimated values ^R, ^X, and ^Vr using the extended Kalman filter will now be described.

The voltage value Vs of the connection point LP can be represented by the nonlinear equation of the following Formula (1). The estimated values ^R, ^X, and ^Vr are calculated by applying the extended Kalman filter based on the nonlinear equation.
[Formula 1] ${V}_{s} = \sqrt{\frac{2 \left(P\hat{R}+Q\hat{X}\right) + {{\hat{V}}_{r}}^{2} + \sqrt{{\left(2\left(P\hat{R}+Q\hat{X}\right)+{{\hat{V}}_{r}}^{2}\right)}^{2} - 4 \left({P}^{2}+{Q}^{2}\right) \left({\hat{R}}^{2}+{\hat{X}}^{2}\right)}}{2}}$

The state equation of the extended Kalman filter can be represented by the following Formula (2). Also, the output equation of the extended Kalman filter can be represented by the following Formula (3).
[Formula 2] ${x}_{k} = f \left({x}_{k - 1}\right) + {w}_{k - 1}$ [Formula 3] ${z}_{k} = h \left({x}_{k}\right) + {v}_{k}$

In Formula (2), x is a state vector having, as components, the resistance component R and the reactance component X of the system impedance of the electric power system 4 and the voltage value Vr of the infinite bus power system 3 as represented in the following Formula (4). In Formula (4), *"T"* represents the transpose.
[Formula 4] $x = {\left[R, X, {V}_{r}\right]}^{T}$

In Formula (2), f is a nonlinear function of the state vector x. In Formula (2), w is a vector of the system noise. Also, in Formula (2) and Formula (3), the index "k" represents the time. In other words, the index "k" is the sequence of the data corresponding to the active power value P, the reactive power value Q, and the voltage value Vs which are acquired regularly. "k-1" represents the data one previous to *"k".* Accordingly, Formula (2) represents the estimation of the current state vector x from the state vector x of one previous. The index "k" is similar in the formulas recited below as well.

In Formula (3), z is the observed value of the voltage value Vs. In Formula (3), *h* is the nonlinear function of x. Also, in Formula (3), v is the observation noise. Formula (3) represents the response of the observed value z to the state vector x. In the example, *h(x)* is the predicted voltage value Vs of the connection point LP *(h(x) = Vs).* In other words, the observed value z can be considered to be the observation noise v added to the voltage value Vs of the connection point LP. The observed value z is the measured value of the voltage value Vs from the measuring device 22.

The extended Kalman filter includes a predict step and an update step. In the predict step, the estimated value calculator 50 predicts the state vector x using the following Formula (5).
[Formula 5] ${x}_{k}^{f} = f \left({x}_{k - 1}^{a}\right) = {x}_{k - 1}^{a}$

In Formula (5), *x^{f}* represents the predicted value of the state vector x. *x^{a}* represents the state vector x updated in the update step. Thus, in the example, the state vector x^{a} after the update is used as the state vector x^{f} after the prediction.

The estimated value calculator 50 calculates the components of the state vector x^{f} after the prediction respectively as the estimated values ^R, ^X, and ^Vr. That is, in other words, the estimated values ^R, ^X, and ^Vr are the components of the state vector x^{a} after the update. Also, the estimated value calculator 50 includes an initial value of the state vector x and uses the initial value as the state vector x^{f} after the prediction in an initial state in which the update step is not performed. Based on the estimated values ^R, ^X, and ^Vr thus calculated, the controller 42 controls the operation of the major circuit part 40 as recited above.

The initial value of the state vector x may be a constant value; for example, when the distributed power source 6 is a solar panel, etc., the average values of one day's amount of the estimated values ^R, ^X, and ^Vr may be calculated; and the average values of the estimated values ^R, ^X, and ^Vr may be used as the initial value of the state vector x of the next day. The estimated value calculator 50 may have the function of calculating the average values in a prescribed period respectively of the estimated values ^R, ^X, and ^Vr and using the calculated average values of the estimated values ^R, ^X, and ^Vr as the initial value of the state vector x in the next prescribed period.

In the predict step, the estimated value calculator 50 predicts the state vector x and predicts a covariance matrix P^{f} using the following Formula (6). The covariance matrix P^{f} is an error covariance matrix of the state vector x^{f} after the prediction considering the effects of the system noise w.
[Formula 6] ${P}_{k}^{f} = {J}_{f} \left({x}_{k - 1}^{a}\right) {P}_{k - 1} {J}_{f} {\left({x}_{k - 1}^{a}\right)}^{T} + {Q}_{k - 1}$

In Formula (6), *J_{f}*(*x*) is a matrix defined by the Jacobian of the nonlinear function f, and in the example, is the diagonal matrix of (1, 1, 1) as represented in the following Formula (7).
[Formula 7] ${J}_{f} \left({x}_{k - 1}^{a}\right) = \frac{\partial f \left(x\right)}{{\partial }_{X}} = diag . \left(1, 1, 1\right)$

In Formula (6), *P*_{*k-*1} is the initial value of the covariance matrix or the covariance matrix of one previous. In Formula *(6), J_{f}*(*x*)*^{T}* is the transposed matrix of the Jacobian matrix J_{f}(*x*). Also, in Formula (6), *Q*_{*k-*1} is the covariance matrix of the system noise w. The covariance matrix Qₖ₋₁ of the system noise w is the expected value of the inner product of the system noise w and the transposed matrix of the system noise w as represented in the following Formula (8).
[Formula 8] $E \left[{w}_{k}{w}_{k}^{T}\right] = {Q}_{k}$

Based on the estimated values ^R, ^X, and ^Vr calculated in the predict step, the controller 42 operates the major circuit part 40 and acquires the active power value P, the reactive power value Q, and the voltage value Vs when operating the major circuit part 40. The estimated value calculator 50 performs the update step after the active power value P, the reactive power value Q, and the voltage value Vs are acquired. In the update step, the estimated value calculator 50 updates the state vector x based on the active power value P, the reactive power value Q, and the voltage value Vs that are acquired.

In the update step, first, the estimated value calculator 50 optimizes the Kalman gain for updating the state vector x based on the covariance matrix P^{f} and the acquired measured values of the active power value P, the reactive power value Q, and the voltage value Vs. The Kalman gain is determined by the following Formula (9).
[Formula 9] ${K}_{k} = {P}_{k}^{f} {J}_{h} {\left({x}_{k}^{f}\right)}^{T} {\left[{J}_{h}\left({x}_{k}^{f}\right){P}_{k}^{f}{J}_{h}{\left({x}_{k}^{f}\right)}^{T}+{R}_{k}\right]}^{- 1}$

In Formula (9), *Jₕ*(*x*) is a matrix defined by the Jacobian of the nonlinear function h. In the example, the nonlinear function h(x) is the voltage value Vs of the connection point LP; therefore, *Jₕ*(*x*) is represented by the following Formula (10).
[Formula 10] ${J}_{h} \left(x\right) = \frac{\partial h \left(x\right)}{{\partial }_{X}} = \left(\frac{\partial {V}_{s}}{\partial R}\frac{\partial {V}_{s}}{\partial X}\frac{\partial {V}_{s}}{\partial {V}_{r}}\right)$

In Formula (10), *∂Vs*/ *∂R, ∂Vs*/ *∂X,* and *∂Vs*/ *∂Vr* are represented respectively in the following Formula (11), Formula (12), and Formula (13) from Formula (1) recited above.
[Formula 11] $\frac{\partial {V}_{s}}{\partial R} = \frac{P}{{V}_{s}} + \frac{P}{2 {V}_{s} \sqrt{{B}^{2} - 4 C}} \left(B-2\left({R}^{2}+{X}^{2}\right)\right)$ [Formula 12] $\frac{\partial {V}_{s}}{\partial X} = \frac{Q}{{V}_{s}} + \frac{Q}{2 {V}_{s} \sqrt{{B}^{2} - 4 C}} \left(B-2\left({R}^{2}+{X}^{2}\right)\right)$ [Formula 13] $\frac{\partial {V}_{s}}{\partial {V}_{r}} = \frac{{V}_{r}}{{V}_{s}} + \frac{2 {V}_{r} B}{4 {V}_{s} \sqrt{{B}^{2} - 4 C}}$

In Formula (11), Formula (12), and Formula (13), B is the following Formula (14); and C is the following Formula (15).
[Formula 14] $B = 2 \left(RP+XQ\right) + {V}_{r}^{2}$
[Formula 15] $C = \left({P}^{2}+{Q}^{2}\right) \left({R}^{2}+{X}^{2}\right)$

Also, in Formula (9) recited above, *Jₕ*(*x*)*^{T}* is the transposed matrix of the Jacobian matrix Jₕ(*x*). In Formula (9), *Rₖ* is the covariance matrix of the observation noise v. A covariance matrix Rₖ of the observation noise v is the expected value of the inner product of the observation noise v and the transposed matrix of the observation noise v as represented in the following Formula (16).
[Formula 16] $E \left[{v}_{k}{v}_{k}^{T}\right] = {R}_{k}$

In Formula (9), the portion of [*Jₕ*(*x*)*P^{f}Jₕ*(*x*)*^{T} + Rₖ*]⁻¹ is, in other words, the error covariance for the prediction error (z - *h*(*x^{f}*))*.*

In the update step, after the optimization of the Kalman gain is performed, the estimated value calculator 50 uses the Kalman gain to update the state vector x using the following Formula (17).
[Formula 17] ${x}_{k}^{a} = {x}_{k}^{f} + {K}_{k} \left({z}_{k}-h\left({x}_{k}^{f}\right)\right)$

In Formula (17), *h*(*x^{f}*) is the predicted value of the voltage value Vs calculated from the state vector x^{f} after the prediction using Formula (1). In other words, the estimated value calculator 50 determines the prediction error of the voltage value Vs of the connection point LP based on the measured value z of the voltage value Vs of the connection point LP and the predicted value h(*x^{f}*) of the voltage value Vs of the connection point LP calculated using the state vector x^{f} after the prediction. The estimated value calculator 50 determines the prediction error by subtracting the predicted value h(*x^{f}*) from the measured value z.

The estimated value calculator 50 calculates a correction value of the state vector x by multiplying the prediction error by the Kalman gain, and determines the state vector x^{a} after the update by adding the correction value to the state vector x^{f} after the prediction. Thereby, the next state vector x can be predicted by considering the prediction error.

At this time, the estimated value calculator 50 determines whether or not the absolute value of the prediction error (z *- h*(*x^{f}*)) is not less than a prescribed value. When not less than the prescribed value, the estimated value calculator 50 resets the covariance matrix Pₖ₋₁ of the previous time to the initial value. The initial value of the covariance matrix is, for example, a covariance matrix having a relatively large value such as diag(200, 200, 200), etc. Thereby, the convergence of the covariance matrix Pₖ₋₁ can be faster when the system characteristics change, etc.

In the update step, the estimated value calculator 50 updates the state vector x and updates the covariance matrix P using the following Formula (18). As represented in Formula (18), the estimated value calculator 50 updates the covariance matrix P based on the optimized Kalman gain.
[Formula 18] ${P}_{k} = \left[I-{K}_{k}{J}_{h}\left({x}_{k}^{f}\right)\right] {P}_{k}^{f}$

The estimated value calculator 50 repeatedly performs the predict step and the update step recited above. Thereby, the estimated values ^R, ^X, and ^Vr can be predicted using the extended Kalman filter; and the operation of the major circuit part 40 can be controlled based on the prediction. The fluctuation of the voltage value Vs of the connection point LP can be suppressed thereby. In Formula (18), I is the identity matrix.

The calculation of the reactive power command value Qn by the reactive power calculator 52 will now be described.

FIG. 3 is a graph schematically illustrating an example of the operation of the reactive power calculator.

The horizontal axis of FIG. 3 is the reactive power value Q of the connection point LP; and the vertical axis of FIG. 3 is the voltage value Vs of the connection point LP.

When the estimated values ^R, ^X, and ^Vr, the active power value P, the reactive power value Q, and the voltage value Vs are input from the estimated value calculator 50, the reactive power calculator 52 calculates a slope K of the voltage value Vs with respect to the reactive power value Q based on the calculation result of the estimated value calculator 50 as illustrated in FIG. 3. The reactive power calculator 52 calculates the slope K using the following Formula (19). In Formula (19), B is from Formula (14); and C is from Formula (15).
[Formula 19] $\frac{\partial {V}_{s}}{\partial Q} = K = \frac{X}{{V}_{s}} + \frac{1}{2 {V}_{s} \sqrt{{B}^{2} - 4 C}} \left(BX-2Q\left({R}^{2}+{X}^{2}\right)\right)$

The voltage value Vs_{(*n*)} of the connection point LP of the next time can be represented by the following Formula (20), in which the voltage value of the connection point LP of the next time is *Vs*_{(*n*)}*,* the voltage value of the connection point LP of the previous time measured by the measuring device 22 is *Vs*_{(*n-*1)}*,* the reactive power value of the connection point LP of the next time is *Qₙ,* and the reactive power value of the connection point LP of the previous time measured by the measuring device 22 is *Q*_{*n-*1}*.*
[Formula 20] ${V}_{s \left(n\right)} = {V}_{s \left(n-1\right)} + K \left({Q}_{n}-{Q}_{n - 1}\right)$

Accordingly, the reactive power value Qₙ of the connection point LP of the next time can be represented by the following Formula (21), in which the voltage value *Vs*_{(*n*)} of the connection point LP of the next time is the designated value Vsr.
[Formula 21] ${Q}_{n} = {Q}_{n - 1} + {K}^{- 1} \left({V}_{sr}-{V}_{s \left(n-1\right)}\right)$

Thus, the reactive power calculator 52 calculates the slope K based on the values input from the estimated value calculator 50, calculates the reactive power value Qₙ of the connection point LP of the next time, and calculates the reactive power value Qₙ of the connection point LP of the next time as the reactive power command value Qn.

FIG. 4A to FIG. 4C are graphs schematically illustrating an example of simulation results of the distributed power source system according to the embodiment.

The vertical axis of FIG. 4A is the voltage value Vs of the connection point LP and the voltage value Vr of the infinite bus power system 3. In the simulation, the designated value Vsr is set to the voltage value Vr of the infinite bus power system 3.

The vertical axis of FIG. 4B is the reactive power value Q and an optimal reactive power value Qop for setting the voltage value Vs of the connection point LP to the voltage value Vr of the infinite bus power system 3.

The vertical axis of FIG. 4C is the slope K.

In FIG. 4A to FIG. 4C, the horizontal axis is time. Also, in FIG. 4A and FIG. 4B, the vertical axis is the amount per unit in which the rating is set to "1 p.u."

The optimal reactive power value Qop can be represented by the following Formula (22), in which the designated value Vsr is used as ^*Vr.* In Formula (22), "sign" is the sign function.
[Formula 22] ${Q}_{op} = \frac{\hat{X} {{\hat{V}}_{r}}^{2}}{{\hat{R}}^{2} + {\hat{X}}^{2}} - sign \left(\hat{X}\right) \sqrt{\left(\frac{\hat{X} {{\hat{V}}_{r}}^{2}}{{\hat{R}}^{2} + {\hat{X}}^{2}}\right) - {P}^{2} + 2 P \frac{\hat{R} {{\hat{V}}_{r}}^{2}}{{\hat{R}}^{2} + {\hat{X}}^{2}}}$

In the simulation as illustrated in FIG. 4A to FIG. 4C, by supplying the reactive power of the reactive power command value Qn to the connection point LP, the voltage value Vs of the connection point LP converged to the voltage value Vr of the infinite bus power system 3; and the reactive power value Q of the connection point LP converged to the optimal reactive power value Qop.

Thus, in the distributed power source system 2 and the power conversion device 10 according to the embodiment, the voltage of the connection point LP can be controlled appropriately to the designated value Vsr by supplying the appropriate reactive power to the connection point LP.

Also, *Vs = Vr* can be achieved by the optimal reactive power value Qop; therefore, it is also possible to increase the stable power limit.

FIG. 5 is a graph schematically illustrating an example of the operation of the distributed power source system according to the embodiment.

The power conversion device 10 includes a controllable range in which the power factor is controllable. The controllable range of the power factor of the power conversion device 10 is, for example, the range of ±0.85 or more. In other words, both the lagging power factor and the leading power factor are in the range not less than 0.85 and not more than 1.00.

Therefore, as illustrated in FIG. 5, for the voltage value Vs of the connection point LP as well, the power conversion device 10 includes a controllable range which is controllable and an uncontrollable range which is uncontrollable. FIG. 5 schematically illustrates an example of the controllable range of the voltage value Vs in the case where R = 0.1 (pu), *X* = 0.2 (pu), *Vr* = 1 (pu), and the controllable range of the power factor is set to ±0.85 or more.

When the calculated reactive power command value Qn exceeds the controllable range in the result of calculating the reactive power command value Qn, the reactive power calculator 52 sets the maximum or the minimum reactive power value within the controllable range as the reactive power command value Qn.

An example of a simulation performed by the inventor of the application will now be described.

FIG. 6 is an interference system diagram used in the simulation.

As illustrated in FIG. 6, the simulation examines the case where two systems of first and second systems (the power conversion devices 10) are connected to the electric power system 4.

FIG. 7A to FIG. 7F are graphs schematically illustrating an example of the simulation.

FIG. 7A schematically illustrates the temporal change of an active power P10 output by the first system and a change amount P1x of the active power of the connection point accompanying the output of the active power of the first system.

FIG. 7B schematically illustrates the temporal change of an active power P20 output by the second system and a change amount P2x of the active power of the connection point accompanying the output of the active power of the second system.

FIG. 7C schematically illustrates the temporal change of a reactive power Q10 output by the first system and a change amount Q1x of the reactive power of the connection point accompanying the output of the reactive power of the first system.

FIG. 7D schematically illustrates the temporal change of a reactive power Q21 output by the second system and a change amount Q2x of the reactive power of the connection point accompanying the output of the reactive power of the second system.

FIG. 7E schematically illustrates the temporal change of an output voltage Vs1 of the first system.

FIG. 7F schematically illustrates the temporal change of an output voltage Vs2 of the second system.

FIG. 7A to FIG. 7F examine the changes of the voltages of the systems in the case where the first system and the second system are operated at a power factor of 1, and the active power of the connection point changes quadratically due to the output of the active power of the first system.

In the case where the systems are operated at the power factor of 1 as illustrated in FIG. 7E, the output voltage of the first system undesirably changes as the active power of the connection point changes. Also, as illustrated in FIG. 7F, not only the output voltage of the first system but also the output voltage of the second system undesirably changes. The voltage of the connection point also fluctuates undesirably thereby.

FIG. 8A to FIG. 8E are graphs schematically illustrating an example of a simulation.

FIG. 8A schematically illustrates the temporal change of the active power value P of the connection point and the optimal reactive power value Qop.

FIG. 8B schematically illustrates the temporal change of the voltage value Vs of the connection point.

FIG. 8C schematically illustrates the temporal change of the estimated value ^R of the resistance component R of the system impedance and the estimated value ^X of the reactance component X of the system impedance of the electric power system 4.

FIG. 8D schematically illustrates the temporal change of the estimated value ^Vr of the voltage value Vr of the infinite bus power system 3.

FIG. 8E schematically illustrates the temporal change of a prediction error err represented by *(z - h*(*x^{f}*))*.*

FIG. 8A to FIG. 8E illustrate the values of the first system in the case where the designated value Vsr is set to the voltage value Vr of the infinite bus power system 3, the slope K and the reactive power command value Qn are calculated, and the first system performs the control of supplying the reactive power based on the reactive power command value Qn to the connection point for the condition of the active power changing similarly to FIG. 7A and FIG. 7B.

As illustrated in FIG. 8B, compared to the case where a constant power factor control at a power factor of 1 is performed, the fluctuation of the voltage value Vs can be suppressed in the case where the control of calculating the slope K and the reactive power command value Qn is performed.

FIG. 9A to FIG. 9C are graphs schematically illustrating an example of a simulation.

FIG. 9A schematically illustrates the temporal change of the active power P10 output by the first system, the change amount P1x of the active power of the connection point accompanying the output of the active power of the first system, the reactive power Q10 output by the first system, and the change amount Q1x of the reactive power of the connection point accompanying the output of the reactive power of the first system.

FIG. 9B schematically illustrates the temporal change of the output voltage Vs1 of the first system.

FIG. 9C schematically illustrates the temporal change of a power factor Pf1 of the first system.

FIG. 9A to FIG. 9C examine the case where the first system and the second system are operated at a power factor of 1, and the output voltage Vs1 of the first system changes in a wavy form due to the output of the active power of the first system. In the example as illustrated in FIG. 9C, the power factor Pf1 of the first system changes from a lagging power factor to a leading power factor due to the change of the output voltage Vs1 of the first system.

FIG. 10A to FIG. 10G are graphs schematically illustrating an example of a simulation.

FIG. 10A schematically illustrates the temporal change of the active power P10 output by the first system, the change amount P1x of the active power of the connection point accompanying the output of the active power of the first system, the reactive power Q10 output by the first system, and the change amount Q1x of the reactive power of the connection point accompanying the output of the reactive power of the first system.

FIG. 10B schematically illustrates the temporal change of the output voltage Vs1 of the first system.

FIG. 10C schematically illustrates the temporal change of the power factor Pf1 of the first system.

FIG. 10D schematically illustrates the temporal change of the estimated value ^R of the resistance component R of the system impedance and the estimated value ^X of the reactance component X of the system impedance of the electric power system 4.

FIG. 10E schematically illustrates the temporal change of the estimated value ^Vr of the voltage value Vr of the infinite bus power system 3.

FIG. 10F schematically illustrates the temporal change of the slope K.

FIG. 10G schematically illustrates the temporal change of the absolute value of the prediction error err.

FIG. 10A to FIG. 10G illustrate the values of the first system in the case where the designated value Vsr is set to 1.05 (pu), the slope K and the reactive power command value Qn are calculated, and the first system performs the control of supplying the reactive power based on the reactive power command value Qn to the connection point for the condition of the output voltage Vs1 of the first system changing as illustrated in FIG. 9B.

As illustrated in FIG. 10B, the output voltage Vs1 cannot be controlled to the designated value Vsr in the uncontrollable range; but the output voltage Vs1 gradually approaches the designated value Vsr, and in the controllable range, the output voltage Vs1 can be controlled to the designated value Vsr. Thus, even in the case where the designated value Vsr is set to a prescribed value different from the voltage value Vr of the infinite bus power system 3, the fluctuation of the voltage value Vs can be suppressed compared to the case of the constant power factor control at the power factor of 1. Also, in the example, the power factor Pf1 of the first system can be controlled to a lagging power factor as illustrated in FIG. 10C.

FIG. 11A to FIG. 11F are graphs schematically illustrating an example of a simulation.

FIG. 11A schematically illustrates the temporal change of the active power P20 output by the second system, the change amount P2x of the active power of the connection point accompanying the output of the active power of the second system, the reactive power Q21 output by the second system, and the change amount Q2x of the reactive power of the connection point accompanying the output of the reactive power of the second system.

FIG. 11B schematically illustrates the temporal change of the output voltage Vs2 of the second system.

FIG. 11C schematically illustrates the temporal change of a power factor Pf2 of the second system.

FIG. 11D schematically illustrates the temporal change of the active power P20 output by the second system, the change amount P2x of the active power of the connection point accompanying the output of the active power of the second system, the reactive power Q21 output by the second system, and the change amount Q2x of the reactive power of the connection point accompanying the output of the reactive power of the second system.

FIG. 11E schematically illustrates the temporal change of the output voltage Vs2 of the second system.

FIG. 11F schematically illustrates the temporal change of the power factor Pf2 of the second system.

FIG. 11A to FIG. 11C schematically illustrate the values of the second system in the case where the first system is operated at a power factor of 1. FIG. 11D to FIG. 11F schematically illustrate the values of the second system in the case where the first system is operated by the control illustrated in FIG. 10.

As illustrated in FIG. 11B and FIG. 11E, the fluctuation of the output voltage Vs2 of the second system also can be suppressed by the first system performing the control of calculating the slope K and the reactive power command value Qn.

As illustrated in FIG. 11C and FIG. 11F, the second system is operated at the power factor of 1 in FIG. 11. The control of calculating the slope K and the reactive power command value Qn also may be performed in the second system. The fluctuation of the output voltage Vs2 of the second system can be suppressed more appropriately thereby.

FIG. 12 is a graph schematically illustrating an example of a simulation.

FIG. 12 schematically illustrates a theoretical solution Qs of the reactive power of the second system and a reactive power Qf in the case where the control of calculating the slope K and the reactive power command value Qn is performed in the second system. The theoretical solution Qs is the theoretical solution of the optimal reactive power for setting the output voltage Vs2 of the second system to the voltage value Vr of the infinite bus power system 3. In other words, the theoretical solution Qs is the optimal reactive power value Qop. Also, the designated value Vsr is set to the voltage value Vr of the infinite bus power system 3 in the calculation of the reactive power Qf.

As illustrated in FIG. 12, the reactive power Qf substantially matches the theoretical solution Qs in the controllable range. Accordingly, by performing the control of calculating the slope K and the reactive power command value Qn, the fluctuation of the output voltage Vs2 of the second system in the controllable range also can be suppressed appropriately.

Thus, in the distributed power source system 2, by calculating the slope K and the reactive power command value Qn in multiple power conversion devices 10 connected to the electric power system 4 and by performing the control of supplying the appropriate reactive power based on the reactive power command value Qn to the connection point, the voltage increase due to the power transmission can be suppressed further; and *Vs = Vr* can be achieve more easily. For example, the voltage management function on the electric power system 4 side can be simplified such as reducing the number of reactive power compensation devices installed on the electric power system 4 side, etc.

FIG. 13A to FIG. 13G are graphs schematically illustrating an example of a simulation.

FIG. 13A to FIG. 13G schematically illustrate the temporal change of respectively the same characteristics as FIG. 10A to FIG. 10G.

FIG. 13A to FIG. 13G illustrates the values of the first system in the case where the designated value Vsr is set to 1.00 (pu), the slope K and the reactive power command value Qn are calculated, and the first system performs the control of supplying the reactive power based on the reactive power command value Qn to the connection point for the condition of the output voltage Vs1 of the first system changing as illustrated in FIG. 9B.

As illustrated in FIG. 13B, in the case where the designated value Vsr is set to 1.00 (pu) as well, the output voltage Vs1 can be controlled to the designated value Vsr in the controllable range. Also, in the example as illustrated in FIG. 13C, the power factor Pf1 of the first system is controlled at a leading power factor. Thus, for conditions providing a leading power factor as well, the output voltage Vs1 can be appropriately controlled to the designated value Vsr by calculating the slope K and the reactive power command value Qn and by performing the control of supplying the reactive power based on the reactive power command value Qn to the connection point.

FIG. 14A to FIG. 14F are graphs schematically illustrating an example of a simulation.

FIG. 14A to FIG. 14F schematically illustrate the temporal change of respectively the same characteristics as FIG. 11A to FIG. 11F.

As illustrated in FIG. 14B and FIG. 14E, for conditions providing a leading power factor as well, similarly to the case of the lagging power factor, the fluctuation of the output voltage Vs2 of the second system also can be suppressed by the first system performing the control of calculating the slope K and the reactive power command value Qn.

FIG. 15 is a graph schematically illustrating an example of a simulation.

FIG. 15 schematically illustrates the theoretical solution Qs of the reactive power of the second system and the reactive power Qf of the case where the control of calculating the slope K and the reactive power command value Qn is performed in the second system in the case where the first system is operated at the conditions of FIG. 13.

As illustrated in FIG. 15, for conditions providing a leading power factor as well, similarly to the case of the lagging power factor, the reactive power Qf substantially matches the theoretical solution Qs in the controllable range. Accordingly, by performing the control of calculating the slope K and the reactive power command value Qn, the fluctuation of the output voltage Vs2 of the second system also can be suppressed appropriately in the controllable range.

FIG. 16A and FIG. 16B are graphs schematically illustrating an example of the operation of the distributed power source system according to the embodiment.

FIG. 16A schematically illustrates an example of an active power Ppf1 in the case where a constant power factor control is performed and an example of an active power Ppf2 in the case where an estimation using an extended Kalman filter is performed.

FIG. 16B schematically illustrates an example of a reactive power Qpf1 in the case where the constant power factor control is performed and an example of a reactive power Qpf2 in the case where an estimation using an extended Kalman filter is performed.

As illustrated in FIG. 16A and FIG. 16B, in the case where the estimation using the extended Kalman filter is performed, compared to the case where the constant power factor control is performed, the reactive power can be small; and the power factor can be improved. Accordingly, the active power can be supplied more efficiently from the distributed power source 6 to the electric power system 4. For example, the profit from selling the electrical power of the owner of the distributed power source 6 can be increased.

Thus, in the distributed power source system 2 and the power conversion device 10 according to the embodiment, by supplying the appropriate reactive power to the connection point LP, the fluctuation of the voltage Vs of the connection point LP can be suppressed more appropriately; the power factor of the output alternating current power can be improved; and the active power can be supplied to the electric power system 4 more efficiently.

Hereinabove, embodiments of the invention are described with reference to specific examples. However, the embodiments of the invention are not limited to these specific examples. For example, one skilled in the art may similarly practice the invention by appropriately selecting specific configurations of components included in the distributed power source system 2 and the power conversion device 10 from known art.

## Claims

1. A power conversion device (10) connecting a distributed power source (6) to an electric power system (4), configured to convert electrical power of the distributed power source (6) into alternating current power corresponding to the electric power system (4) and to supply the alternating current power after the converting to the electric power system (4), the electric power system (4) being connected to an infinite bus power system (3),
the power conversion device (10) comprising:
a major circuit part (40) configured to convert the electrical power of the distributed power source (6) into the alternating current power corresponding to the electric power system (4); and
a controller (42) configured to control an operation of the major circuit part (40),
the controller (42) including:
an estimated value calculator (50) configured to calculate an estimated value (^R) of a resistance component (R) of a system impedance of the electric power system (4), an estimated value (^X) of a reactance component (X) of the system impedance, and an estimated value (^Vr) of a voltage value (Vr) of the infinite bus power system (3) based on an active power value (P) of a connection point (LP) to the electric power system (4), a reactive power value (Q) of the connection point (LP), and a voltage value (Vs) of the connection point (LP) by using a Kalman filter applicable to a nonlinear equation;
**characterized in that**
the controller (42) further comprises
a reactive power calculator (52) configured to receive an input of a designated value (Vsr) of a voltage of the connection point (LP) and to calculate a reactive power command value (Qn) of reactive power supplied to the electric power system (4) to cause the voltage value (Vs) of the connection point (LP) to approach the designated value (Vsr) based on the active power value (P) of the connection point (LP) to the electric power system (4), the reactive power value (Q) of the connection point (LP), the voltage value (Vs) of the connection point (LP), the estimated value (^R) of the resistance component (R) of the system impedance, the estimated value (^X) of the reactance component (X) of the system impedance, the estimated value (^Vr) of the voltage value (Vr) of the infinite bus power system (3), and the designated value (Vsr) of the voltage of the connection point (LP); and
a drive circuit (54) configured to drive the major circuit part (40) to output a prescribed active power and reactive power corresponding to the reactive power command value (Qn), wherein
the reactive power calculator (52) is configured to calculate a slope of the voltage value (Vs) of the connection point (LP) with respect to the reactive power value (Q) of the connection point (LP) based on a calculation result of the estimated value calculator (50), and to calculate the reactive power command value (Qn) based on the reactive power value (Q) of the connection point (LP) of a previous time, the voltage value (Vs) of the connection point (LP) of the previous time, the designated value (Vsr), and the slope.

2. The power conversion device (10) according to claim 1, wherein the estimated value calculator (50) is configured to use an extended Kalman filter as the Kalman filter applicable to the nonlinear equation.

3. The power conversion device (10) according to claim 2, wherein
the estimated value calculator (50) is configured to predict a state vector having the resistance component of the system impedance, the reactance component of the system impedance, and the voltage value of the infinite bus power system (3) as components, and to calculate the components of the state
vector after the predicting respectively as the estimated value (^R) of the resistance component (R) of the system impedance of the electric power system (4), the estimated value (^X) of the reactance component (X) of the system impedance, and the estimated value (^Vr) of the voltage value (Vr) of the infinite bus power system (3),
the controller (42) is configured to operate the major circuit part (40) based on the calculated estimated values and to acquire the active power value (P), the reactive power value (Q), and the voltage value (Vs) of the connection point (LP) when operating the major circuit part (40), and
the estimated value calculator (50) is configured to update the state vector based on the acquired active power value (P), the acquired reactive power value (Q), and the acquired voltage value (Vs) of the connection point (LP).

4. The power conversion device (10) according to claim 3, wherein the estimated value calculator (50) is configured to use the state vector after the updating as the state vector after the predicting.

5. The power conversion device (10) according to claim 3 or 4, wherein
the estimated value calculator (50) is configured to predict the state vector and to predict a covariance matrix relating to an error of the state vector after the predicting,
after acquiring measured values of the active power value (P), the reactive power value (Q), and the voltage value (Vs) of the connection point (LP), to optimize
a Kalman gain for updating the state vector based on the covariance matrix and the acquired measured values,
to determine a prediction error of the voltage value (Vs) of the connection point (LP) based on the measured value of the voltage value (Vs) of the connection point (LP) and a predicted value of the voltage value of the connection point (LP) calculated using the state vector after the predicting, and
to update the state vector based on the prediction error and the optimized Kalman gain and to update the covariance matrix based on the optimized Kalman gain.

6. The power conversion device (10) according to claim 5, wherein the estimated value calculator (50) is configured to reset the covariance matrix to an initial value when an absolute value of the prediction error is a prescribed value or more.

7. The power conversion device (10) according to any one of claims 3 to 6, wherein the estimated value calculator (50) is configured to calculate average values in a prescribed period respectively of the estimated value (^R) of the resistance component (R) of the system impedance, the estimated value (^X) of the reactance component (X) of the system impedance, and the estimated value (^Vr) of the voltage value (Vr) of the infinite bus power system (3), and to use the calculated average values as initial values of the state vector in a next prescribed period.

8. A distributed power source system, comprising:
a distributed power source (6); and
the power conversion device (10) according to any one of claims 1 to 7 connecting the distributed power source (6) to an electric power system (4).

## Patentansprüche

1. Leistungsumwandlungsvorrichtung (10), die eine dezentrale Leistungsquelle (6) mit einem elektrischen Leistungssystem (4) verbindet, die eingerichtet ist, elektrische Leistung der dezentralen Leistungsquelle (6) in Wechselstromleistung umzuwandeln, die dem elektrischen Leistungssystem (4) entspricht, und die Wechselstromleistung nach der Umwandlung dem elektrischen Leistungssystem (4) zuzuführen, wobei das elektrische Leistungssystem (4) mit einem Unendlichkeitsbus-Leistungssystem (3) verbunden ist,
wobei die Leistungsumwandlungsvorrichtung (10) aufweist:
einen Hauptschaltungsteil (40), der eingerichtet ist, die elektrische Leistung der dezentralen Leistungsquelle (6) in die dem elektrischen Leistungssystem (4) entsprechende Wechselstromleistung umzuwandeln, und
eine Steuerungseinrichtung (42), die eingerichtet ist, einen Betrieb des Hauptschaltungsteils (40) zu steuern,
wobei die Steuerungseinrichtung (42) aufweist:
eine Schätzwertberechnungseinrichtung (50), die eingerichtet ist, einen geschätzten Wert (^R) einer Widerstandskomponente (R) einer Systemimpedanz des elektrischen Leistungssystems (4), einen geschätzten Wert (^X) einer Blindwiderstandskomponente (X) der Systemimpedanz und einen geschätzten Wert (^Vr) eines Spannungswerts (Vr) des Unendlichkeitsbus-Leistungssystems (3) auf der Grundlage eines Wirkleistungswerts (P) eines Verbindungspunkts (LP) zu dem elektrischen Leistungssystem (4), eines Blindleistungswerts (Q) des Verbindungspunkts (LP) und eines Spannungswerts (Vs) des Verbindungspunkts (LP) unter Verwendung eines auf eine nichtlineare Gleichung anwendbaren Kalman-Filters zu berechnen,
**dadurch gekennzeichnet, dass**
die Steuerungseinrichtung (42) weiterhin aufweist:
eine Blindleistungsberechnungseinrichtung (52), die eingerichtet ist, eine Eingabe eines festgelegten Werts (Vsr) einer Spannung des Verbindungspunkts (LP) zu empfangen und einen Blindleistungsbefehlswert (Qn) einer Blindleistung, die dem elektrischen Leistungssystem (4) zum Bewirken, dass der Spannungswert (Vs) des Verbindungspunkts (LP) sich dem festgelegten Wert (Vsr) annähert, zugeführt wird, auf der Grundlage des Wirkleistungswerts (P) des Verbindungspunkts (LP) zu dem elektrischen Leistungssystem (4), des Blindleistungswerts (Q) des Verbindungspunkts (LP), des Spannungswerts (Vs) des Verbindungspunkts (LP), des geschätzten Werts (^R) der Widerstandskomponente (R) der Systemimpedanz, des geschätzten Werts (^X) der Blindwiderstandskomponente (X) der Systemimpedanz, des geschätzten Werts (^Vr) des Spannungswerts (Vr) des Unendlichkeitsbus-Leistungssystems (3) und des festgelegten Werts (Vsr) der Spannung des Verbindungspunkts (LP) zu berechnen, und
eine Ansteuerungsschaltung (54), die eingerichtet ist, den Hauptschaltungsteil (40) anzusteuern, um eine vorgegebene Wirkleistung und Blindleistung entsprechend dem Blindleistungsbefehlswert (Qn) auszugeben, wobei
Blindleistungsberechnungseinrichtung (52) eingerichtet ist, eine Steigung des Spannungswerts (Vs) des Verbindungspunkts (LP) in Bezug auf den Blindleistungswert (Q) des Verbindungspunkts (LP) auf der Grundlage eines Berechnungsergebnisses der Schätzwertberechnungseinrichtung (50) zu berechnen, und den Blindleistungsbefehlswert (Qn) auf der Grundlage des Blindleistungswerts (Q) des Verbindungspunkts (LP) zu einer vorhergehenden Zeit, des Spannungswerts (Vs) des Verbindungspunkts (LP) zu der vorhergehenden Zeit, des festgelegten Werts (Vsr) und der Steigung zu berechnen.

2. Leistungsumwandlungsvorrichtung (10) nach Anspruch 1, wobei die Schätzwertberechnungseinrichtung (50) eingerichtet ist, ein erweitertes Kalman-Filter als das auf die nichtlineare Gleichung anwendbare Kalman-Filter zu verwenden.

3. Leistungsumwandlungsvorrichtung (10) nach Anspruch 2, wobei
die Schätzwertberechnungseinrichtung (50) eingerichtet ist, einen Zustandsvektor vorherzusagen, der die Widerstandskomponente der Systemimpedanz, die Blindwiderstandskomponente der Systemimpedanz und den Spannungswert des Unendlichkeitsbus-Leistungssystems (3) als Komponenten aufweist, und die Komponenten des Zustandsvektors nach dem Vorhersagen jeweils als den geschätzten Wert (^R) der Widerstandskomponente (R) der Systemimpedanz des elektrischen Leistungssystems (4), den geschätzten Wert (^X) der Blindwiderstandskomponente (X) der Systemimpedanz und den geschätzten Wert (^Vr) des Spannungswert (Vr) des Unendlichkeitsbus-Leistungssystems (3) zu berechnen,
die Steuerungseinrichtung (42) eingerichtet ist, den Hauptschaltungsteil (40) auf der Grundlage der geschätzten Werte zu betreiben und den Wirkleistungswert (P), den Blindleistungswert (Q) und den Spannungswert (Vs) des Verbindungspunkts (LP) bei Betrieb des Hauptschaltungsteils (40) zu beschaffen, und
die Schätzwertberechnungseinrichtung (50) eingerichtet ist, den Zustandsvektor auf der Grundlage des beschafften Wirkleistungswerts (P), des beschafften Blindleistungswerts (Q) und des beschafften Spannungswerts (Vs) des Verbindungspunkts (LP) zu aktualisieren.

4. Leistungsumwandlungsvorrichtung (10) nach Anspruch 3, wobei die Schätzwertberechnungseinrichtung (50) eingerichtet ist, den Zustandsvektor nach dem Aktualisieren als den Zustandsvektor nach der Vorhersage zu verwenden.

5. Leistungsumwandlungsvorrichtung (10) nach Anspruch 3 oder 4, wobei
die Schätzwertberechnungseinrichtung (50) eingerichtet ist, den Zustandsvektor vorherzusagen und eine Kovarianzmatrix vorherzusagen, die sich auf einen Fehler des Zustandsvektors nach der Vorhersage bezieht,
nach Beschaffen von gemessenen Werten des Wirkleistungswerts (P), des Blindleistungswerts (Q) und des Spannungswerts (Vs) des Verbindungspunkts (LP) eine Kalman-Verstärkung zum Aktualisieren des Zustandsvektors auf der Grundlage der Kovarianzmatrix und der beschaffen gemessenen Werte zu optimieren,
einen Vorhersagefehler des Spannungswerts (Vs) des Verbindungspunkts (LP) auf der Grundlage des gemessenen Werts des Spannungswerts (Vs) des Verbindungspunkts (LP) und eines vorhergesagten Werts des Spannungswerts des Verbindungspunkts (LP), der unter Verwendung des Zustandsvektors nach der Vorhersage berechnet wird, zu bestimmen, und
den Zustandsvektor auf der Grundlage des Vorhersagefehlers und der optimierten Kalman-Verstärkung zu aktualisieren und die Kovarianzmatrix auf der Grundlage der optimierten Kalman-Verstärkung zu aktualisieren.

6. Leistungsumwandlungsvorrichtung (10) nach Anspruch 5, wobei die Schätzwertberechnungseinrichtung (50) eingerichtet ist, die Kovarianzmatrix auf einen anfänglichen Wert zurückzusetzen, wenn ein absoluter Fehler des Vorhersagefehlers ein vorgegebener Wert oder mehr ist.

7. Leistungsumwandlungsvorrichtung (10) nach einem der Ansprüche 3 bis 6, wobei die Schätzwertberechnungseinrichtung (50) eingerichtet ist, Durchschnittswerte in einer vorgegebenen Zeitdauer jeweils des geschätzten Werts (^R) der Widerstandskomponente (R) der Systemimpedanz, des geschätzten Werts (^X) der Blindwiderstandskomponente (X) der Systemimpedanz und des geschätzten Werts (^Vr) des Spannungswerts (Vr) des Unendlichkeitsbus-Leistungssystem (3) zu berechnen, und die berechneten Werte als anfängliche Werte des Zustandsvektors in einer nächsten vorgegebenen Zeitdauer zu verwenden.

8. Dezentrales Leistungsquellensystem mit:
einer dezentralen Leistungsquelle (6) und
der Leistungsumwandlungsvorrichtung (10) nach einem der Ansprüche 1 bis 7, die die dezentrale Leistungsquelle (6) mit einem elektrischen Leistungssystem (4) verbindet.

## Revendications

1. Dispositif de conversion de puissance (10) connectant une source de puissance distribuée (6) à un système de puissance électrique (4), configuré pour convertir de la puissance électrique de la source de puissance distribuée (6) en puissance à courant alternatif correspondant au système de puissance électrique (4) et pour fournir la puissance à courant alternatif après la conversion au système de puissance électrique (4), le système de puissance électrique (4) étant connecté à un système de puissance à bus infini (3),
le dispositif de conversion de puissance (10) comprenant :
une partie de circuit majeure (40) configurée pour convertir la puissance électrique de la source de puissance distribuée (6) en la puissance à courant alternatif correspondant au système de puissance électrique (4) ; et
un contrôleur (42) configuré pour commander un fonctionnement de la partie de circuit majeure (40),
le contrôleur (42) comportant :
un calculateur de valeur estimée (50) configuré pour calculer une valeur estimée (^R) d'une composante résistance (R) d'une impédance système du système de puissance électrique (4), une valeur estimée (^X) d'une composante réactance (X) de l'impédance système, et une valeur estimée (^Vr) d'une valeur de tension (Vr) du système de puissance à bus infini (3) sur la base d'une valeur de puissance active (P) d'un point de connexion (LP) au système de puissance électrique (4), d'une valeur de puissance réactive (Q) du point de connexion (LP), et d'une valeur de tension (Vs) du point de connexion (LP) en utilisant un filtre de Kalman applicable à une équation non linéaire ;
**caractérisé en ce que**
le contrôleur (42) comprend en outre
un calculateur de puissance réactive (52) configuré pour recevoir une entrée d'une valeur désignée (Vsr) d'une tension du point de connexion (LP) et pour calculer une valeur de commande de puissance réactive (Qn) de puissance réactive fournie au système de puissance électrique (4) pour amener la valeur de tension (Vs) du point de connexion (LP) à approcher la valeur désignée (Vsr) sur la base de la valeur de puissance active (P) du point de connexion (LP) au système de puissance électrique (4), de la valeur de puissance réactive (Q) du point de connexion (LP), de la valeur de tension (Vs) du point de connexion (LP), de la valeur estimée (^R) de la composante résistance (R) de l'impédance système, de la valeur estimée (^X) de la composante réactance (X) de l'impédance système, de la valeur estimée (^Vr) de la valeur de tension (Vr) du système de puissance à bus infini (3), et de la valeur désignée (Vsr) de la tension du point de connexion (LP) ; et
un circuit de commande (54) configuré pour commander la partie de circuit majeure (40) pour délivrer une puissance active et une puissance réactive prescrites correspondant à la valeur de commande de puissance réactive (Qn), dans lequel
le calculateur de puissance réactive (52) est configuré pour calculer une pente de la valeur de tension (Vs) du point de connexion (LP) par rapport à la valeur de puissance réactive (Q) du point de connexion (LP) par rapport à la valeur de puissance réactive (Q) du point de connexion (LP) sur la base d'un résultat de calcul du calculateur de valeur estimée (50), et pour calculer la valeur de commande de puissance réactive (Qn) sur la base de la valeur de puissance réactive (Q) du point de connexion (LP) d'un instant précédent, de la valeur de tension (Vs) du point de connexion (LP) de l'instant précédent, de la valeur désignée (Vsr) et de la pente.

2. Dispositif de conversion de puissance (10) selon la revendication 1, dans lequel le calculateur de valeur estimée (50) est configuré pour utiliser un filtre de Kalman étendu en tant que filtre de Kalman applicable à l'équation non linéaire.

3. Dispositif de conversion de puissance (10) selon la revendication 2, dans lequel le calculateur de valeur estimée (50) est configuré pour prédire un vecteur d'état ayant la composante résistance de l'impédance système, la composante réactance de l'impédance système, et la valeur de tension du système de puissance à bus infini (3) comme composantes, et pour calculer les composantes du vecteur d'état après la prédiction respectivement en tant que la valeur estimée (^R) de la composante résistance (R) de l'impédance système du système de puissance électrique (4), la valeur estimée (^X) de la composante réactance (X) de l'impédance système, et la valeur estimée (^Vr) de la valeur de tension (Vr) du système de puissance à bus infini (3),
le contrôleur (42) est configuré pour faire fonctionner la partie de circuit majeure (40) sur la base des valeurs estimées calculées et pour acquérir la valeur de puissance active (P), la valeur de puissance réactive (Q) et la valeur de tension (Vs) du point de connexion (LP) lors du fonctionnement de la partie de circuit majeure (40), et
le calculateur de valeur estimée (50) est configuré pour mettre à jour le vecteur d'état sur la base de la valeur de puissance active (P) acquise, de la valeur de puissance réactive (Q) acquise et de la valeur de tension (Vs) acquise du point de connexion (LP).

4. Dispositif de conversion de puissance (10) selon la revendication 3, dans lequel le calculateur de valeur estimée (50) est configuré pour utiliser le vecteur d'état après la mise à jour en tant que vecteur d'état après la prédiction.

5. Dispositif de conversion de puissance (10) selon la revendication 3 ou 4, dans lequel le calculateur de valeur estimée (50) est configuré pour prédire le vecteur d'état et pour prédire une matrice de covariance relative à une erreur du vecteur d'état après la prédiction,
après l'acquisition de valeurs mesurées de la valeur de puissance active (P), de la valeur de puissance réactive (Q), et de la valeur de tension (Vs) du point de connexion (LP), pour optimiser un gain de Kalman pour la mise à jour du vecteur d'état sur la base de la matrice de covariance et des valeurs mesurées acquises, pour déterminer une erreur de prédiction de la valeur de tension (Vs) du point de connexion (LP) sur la base de la valeur mesurée de la valeur de tension (Vs) du point de connexion (LP) et d'une valeur prédite de la valeur de tension du point de connexion (LP) calculée en utilisant le vecteur d'état après la prédiction, et
pour mettre à jour le vecteur d'état sur la base de l'erreur de prédiction et du gain de Kalman optimisé et pour mettre à jour la matrice de covariance sur la base du gain de Kalman optimisé.

6. Dispositif de conversion de puissance (10) selon la revendication 5, dans lequel le calculateur de valeur estimée (50) est configuré pour réinitialiser la matrice de covariance à une valeur initiale lorsqu'une valeur absolue de l'erreur de prédiction est une valeur prescrite ou plus.

7. Dispositif de conversion de puissance (10) selon l'une quelconque des revendications 3 à 6, dans lequel le calculateur de valeur estimée (50) est configuré pour calculer des valeurs moyennes dans une période prescrite respectivement de la valeur estimée (^R) de la composante résistance (R) de l'impédance système, de la valeur estimée (^X) de la composante réactance (X) de l'impédance système, et de la valeur estimée (^Vr) de la valeur de tension (Vr) du système de puissance à bus infini (3), et pour utiliser les valeurs moyennes calculées en tant que valeurs initiales du vecteur d'état au cours d'une période suivante prescrite.

8. Système de source de puissance distribuée, comprenant :
une source de puissance distribuée (6) ; et
le dispositif de conversion de puissance (10) selon l'une quelconque des revendications 1 à 7 connectant la source de puissance distribuée (6) à un système de puissance électrique (4).
